# EUROPÄISCHE PATENTSCHRIFT

(11) **EP 3 840 994 B1**
(45) Veröffentlichungstag und Bekanntmachung des Hinweises auf die Patenterteilung: **12.04.2023**
(21) Anmeldenummer: 19740313.2
(22) Anmeldetag: 28.06.2019
(51) Int. Cl.: B60T 17/22

(54) **ELEKTRONISCHES BREMSSYSTEM**
ELECTRONIC BRAKE SYSTEM
SYSTÈME DE FREINAGE ÉLECTONIQUE

(30) Priorität: 22.08.2018 DE 102018120477
(43) Veröffentlichungstag der Anmeldung: 30.06.2021
(73) Patentinhaber: ZF CV Systems Europe BV, 1170 Brussels (BE)
(72) Erfinder: RISSE, Rainer, 30982 Pattensen-Reden (DE); STENDER, Axel, 31787 Hameln (DE); WITTE, Norbert, 31867 Lauenau (DE)
(74) Vertreter: Ohlendorf, Henrike
(86) Internationale Anmeldenummer: PCT/EP2019/067282
(87) Internationale Veröffentlichungsnummer: WO 2020/038632

(56) Entgegenhaltungen:
- EP-A2- 3 124 342
- WO-A1-2017/137140
- WO-A1-2018/022615
- WO-A1-2018/075439
- DE-A1-102015 112 232

## Beschreibung

Die Erfindung betrifft ein elektronisches Bremssystem für ein Fahrzeug, mit einem elektronischen Steuergerät und Verschleißsensoren an Bremsen. Insbesondere geht es um ein elektronisches Bremssystem für Anhängefahrzeuge, vorzugsweise mit pneumatischer Bremsanlage. Die Erfindung ist aber auch in Verbindung mit Zugfahrzeugen und/oder anderen Bremsanlagen vorteilhaft einsetzbar. Daneben betrifft die Erfindung ein Steuergerät für ein elektronisches Bremssystem.

Bekannt ist die Verwendung von Verschleißsensoren an Bremsen und die Übermittlung von Verschleißsignalen an ein Bremsen-Steuergerät über ein fahrzeuginternes Bussystem, siehe EP 2 439 117 B1. Die hierfür erforderliche Verkabelung schließt eine Nachrüstung von Fahrzeugen aus. Der Aufwand wäre zu hoch. Für eine drahtlose Übermittlung der Verschleißsignale müsste das Bremsen-Steuergerät zudem mit einem geeigneten Empfänger ausgestattet werden.

Moderne Fahrzeuge sind mit einem Reifendrucküberwachungssystem (TPMS = Tire Pressure Monitoring System) ausgestattet. Jeder Reifen weist einen Drucksensor und einen Sender auf, der Signale in einem genormten Format (TPMS-Format) an einen Empfänger im Fahrzeug übersendet. Die Fahrzeugelektronik kann die empfangenen Signale auswerten und beispielsweise dem Fahrer Warnhinweise anzeigen. Aus der WO 2016/058679 A1 ist es bekannt, ein Reifendrucküberwachungs-Modul, welches Signale von Reifendrucksensoren empfängt, in einen sogenannten Modulator für das elektronische Bremssystem zu integrieren. Der Modulator weist auch das Steuergerät auf.

EP 3 124 342 A2 offenbart ein Verfahren zur Ansteuerung einer oder mehrerer Bremsen. Jede Bremse gemäß EP 3 124 342 A2 weißt Bremsbeläge auf, die beim Bremsen gegen Bremsscheiben gepresst werden. Dadurch verschleißen die Bremsbeläge und die Bremsscheibe. Um den Verschleiß der Bremsbeläge und der Bremsscheibe als Summensignal zu ermitteln, werden Verschleißsensoren an der Bremse drahtlos an eine Auswertungs- und Steuerungseinrichtung angeschlossen.

WO 2018/022615 A1 und WO 2018/075439 A1 offenbaren jeweils ein Bremsscheibenabnutzungs-Messsystem mit einem Sensor, der ein Signal erzeugt, das eine Bremsscheibenabnutzung beschreibt. Der Sensor ist drahtlos mit einer an einem Fahrzeug angeordneten Steuereinheit verbunden.

Aufgabe der vorliegenden Erfindung ist die Schaffung eines elektronischen Bremssystems mit Steuergerät und Verschleißsensoren, welches insbesondere für eine Nachrüstung vorteilhaft geeignet ist.

Zur Lösung der Aufgabe weist das elektronische Bremssystem die Merkmale des Anspruchs 1 auf. Insbesondere ist vorgesehen, dass Signale der Verschleißsensoren drahtlos an das Steuergerät oder einen mit dem Steuergerät verbundenen Empfänger übermittelt werden. Sender und Empfänger einfacherer Art sind kostengünstig erhältlich und verwendbar. Eine Nachrüstung kann deshalb mit relativ geringem Aufwand realisiert werden.

Das Steuergerät weist einen Empfänger für drahtlose Signale von Reifendrucksensoren eines Reifendrucküberwachungssystems auf oder ist mit einem derartigen Empfänger verbunden, wobei die Verschleißsensoren Sender für die drahtlose Übermittlung von Signalen der Verschleißsensoren im Format der Signale von Reifendrucksensoren aufweisen oder mit derartigen Sendern verbunden sind. Insbesondere senden die Sender ihre Signale im bekannten TPMS-Format von Reifendrucküberwachungssystemen. Steuergeräte mit geeigneten Empfängern existieren bereits.

Nach einem weiteren Gedanken der Erfindung können die Verschleißsensoren einen Summenverschleiß von auf Bremsscheiben wirkenden Bremsbelägen messen. Ermittelt wird so der Abstand von Bremsbelagträgern zueinander. Die Belagdicke eines einzelnen Bremsbelags wird selbst nicht gemessen, fließt aber mittelbar in die Messung ein.

Nach einem weiteren Gedanken der Erfindung kann vorgesehen sein, dass die Verschleißsensoren ein zum Verschleiß von Bremsbelägen proportionales Signal ausgeben. Auch dabei kann es sich um den Summenverschleiß handeln.

Nach einem weiteren Gedanken der Erfindung kann vorgesehen sein, dass insbesondere zeitgleiche oder innerhalb eines definierten Zeitraums liegende Signale der Verschleißsensoren verschiedener Bremsen miteinander verglichen werden. Auf diese Weise können Abweichungen zwischen den Bremsen erkannt werden, etwa hängende Bremszylinder.

Nach einem weiteren Gedanken der Erfindung kann vorgesehen sein, dass Signale der Verschleißsensoren vor, während und/oder nach einer Bremsung übermittelt werden. Durch Kombination und/oder Vergleich der Signale können bislang nicht mögliche Erkenntnisse gewonnen werden. Auch kann es sinnvoll sein, nur nach einer Bremsung Signale zu übermitteln, etwa zur Einsparung von Energie. Auch kann während einer Bremsung ein maximales Verschleißsignal ermittelt und übermittelt werden. Die Höhe des Verschleißsignals ist auch abhängig vom Bremsdruck.

Nach einem weiteren Gedanken der Erfindung kann vorgesehen sein, dass aus der Differenz der Signale vor und nach der Bremsung beurteilt wird, ob sich die Bremse wieder in eine Ausgangslage zurückgestellt hat. Auf diese Weise kann eine klemmende Bremse mit der Gefahr der Überhitzung erkannt werden.

Nach einem weiteren Gedanken der Erfindung kann vorgesehen sein, dass zur Beurteilung der Signale eine Aktivierung der Bremsen herangezogen wird. Im elektronischen Bremssystem wird ein elektronisches Bremssignal durch Betätigung eines Bremspedals ausgelöst. Das Steuergerät empfängt das Bremssignal und steuert elektromagnetische Ventile für die Betätigung der Bremszylinder entsprechend an. So kann vorgesehen sein, dass Verschleißsignale der Verschleißsensoren nur nach Aktivierung der Bremsen, also während oder nach vorliegenden Bremssignalen, ausgewertet werden. Auch können so die letzten vor der Bremsbetätigung übermittelten Signale identifiziert und ausgewertet werden, etwa in Verbindung mit den während und/oder nach der Bremsbetätigung übermittelten Signalen.

Nach einem weiteren Gedanken der Erfindung kann vorgesehen sein, dass aus der Differenz eines maximalen Signals und eines Signals vor und/oder nach einer Bremsung beurteilt wird, ob die Bremsen funktionsfähig sind. Beispielsweise kann so ermittelt werden, ob die Nachstellung der Bremsen funktioniert oder ob eine Bremse in das sogenannte Fading läuft.

Nach einem weiteren Gedanken der Erfindung kann vorgesehen sein, dass die Verschleißsensoren ein zur Position eines Sensorstabes proportionales Signal ausgeben. Auch dabei kann es sich um den Summenverschleiß handeln.

Nach einem weiteren Gedanken der Erfindung kann vorgesehen sein, dass der Verschleißsensor einen Taststab beinhaltet, welcher mit einem Ende mit einem Bremsbelagträger, insbesondere auf einer bestimmten Seite der Bremse, fest verbunden ist oder dort anliegt, und dass eine Position eines anderen Endes des Taststabes von einem Sensorelement detektierbar ist. Das Sensorelement ist vorzugsweise mit dem anderen Bremsbelagträger auf der gegenüberliegenden Seite der Bremse verbunden oder liegt dort an. Beispielsweise beinhaltet das Sensorelement einen Hall-Sensor, während der Taststab einen Magneten aufweist, welcher vom Hall-Sensor detektiert wird. Sensorelement und Ende des Taststabes müssen nicht unmittelbar mit dem Bremsbelagträger verbunden sein oder dort anliegen. Es genügt auch eine Verbindung oder Anlage an mit den Bremsbelagträgern verbunden Bauteilen. Detektierbar soll zumindest mittelbar der Abstand der beiden Bremsbelagträger voneinander sein.

Soweit vorliegend von Verschleißsensoren gesprochen wird, handelt es sich vorzugsweise um eine unbestimmte Anzahl, einschließlich der Möglichkeit nur eines Verschleißsensors. Vorteilhafterweise sind aber alle Bremsen mit Verschleißsensoren ausgestattet.

Gegenstand der Erfindung ist auch ein Steuergerät für ein elektronisches Bremssystem nach einem der Ansprüche 1 bis 11, mit einer Software zur Auswertung von drahtlosen Signalen von Verschleißsensoren an Bremsen. Weiterhin Gegenstand der Erfindung ist auch ein Fahrzeug mit einem elektronischen Bremssystem nach einem der Ansprüche 1 bis 11.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine schematische Darstellung eines elektronischen Bremssystems eines Anhängefahrzeugs mit drei Achsen,
- Fig. 2: eine Radbremse ohne anliegenden Bremsdruck,
- Fig. 3: eine Radbremse mit anliegendem Bremsdruck.

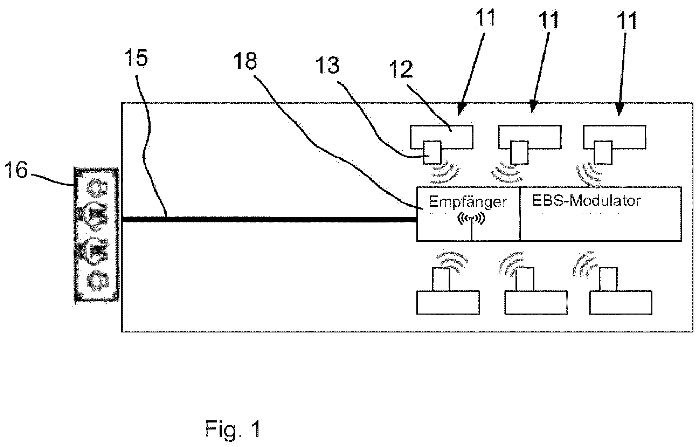

Gemäß Fig. 1 ist ein Anhänger 10 mit sechs Rädern 11 an drei Achsen ausgestattet. Jedes Rad 11 weist eine Bremse 12 mit Verschleißsensor 13 auf.

Der Anhänger 10 ist mit einer pneumatischen Bremsanlage und einem elektronischen Bremssystem (EBS) ausgestattet. Letzteres weist einen sogenannten EBS-Modulator 14 auf, in dem in bekannter Weise ein Bremsensteuergerät und Magnetventile bzw. pneumatische Bauelemente zur Ansteuerung der Bremsen 12 zusammengefasst sind. Das nicht gezeigte Bremsen-Steuergerät ist somit Bestandteil des EBS-Modulators 14.

Der EBS-Modulator 14 ist über pneumatische und elektrische Leitungen 15 und geeignete Schnittstellen, hier zusammengefasst als Schnittstelle 16, an korrespondierende Leitungen eines nicht gezeigten Zugfahrzeugs angeschlossen. Daneben weist der Anhänger 10 nicht gezeigte, übliche Bestandteile einer pneumatischen Bremsanlage mit elektronischem Bremssystem auf.

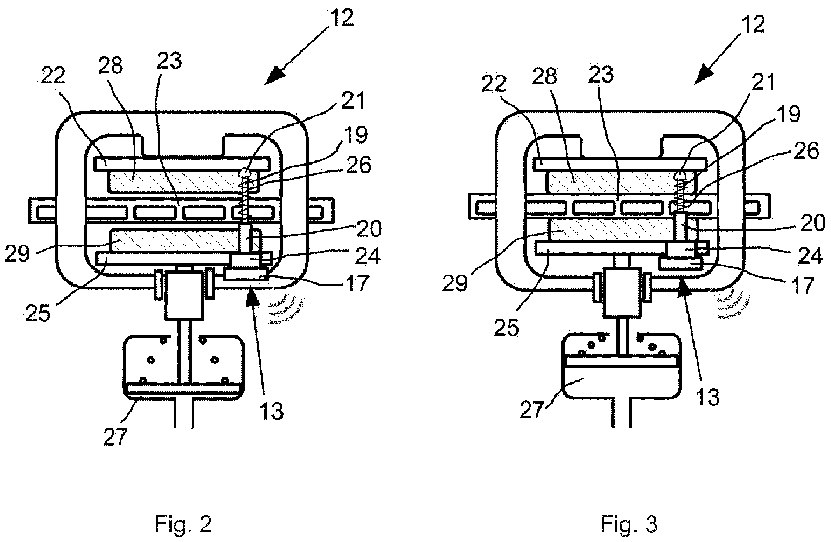

Dem Verschleißsensor 13 ist ein Funkmodul 17 als Sender zugeordnet. Das Funkmodul 17 ist entweder in den Verschleißsensor 13 integriert und nur mit diesem austauschbar, siehe Fig. 2 und 3, oder aber an den Verschleißsensor 13 angeschlossen. Bestandteil des Funkmoduls 17 ist eine eigenständige Energieversorgung, beispielsweise durch eine langlebige Batterie.

Dem EBS-Modulator 14 ist ein Funkmodul 18 als Empfänger zugeordnet, in Fig. 1 als Receiver bezeichnet. Das Funkmodul 18 kommuniziert mit dem Funkmodul 17 und ist in den EBS-Modulator 14 integriert, in das nicht gezeigte Steuergerät integriert oder mit einem dieser beiden Bauteile verbunden, sodass vom Funkmodul 18 aufgenommene Signale im Steuergerät verarbeitet werden können.

Die Funkmodule 17, 18 kommunizieren hier vorzugsweise im selben Format und unter Anwendung desselben Standards der bekannten Reifendrucküberwachungssysteme, also im TPMS-Format. Für neuere Fahrzeuge sind Reifendrucksensoren und die Übermittlung des Reifendrucks per Funk an ein Steuergerät ohnehin vorgeschrieben. Entsprechende Steuergeräte mit Funkmodulen für den Empfang der Signale von Reifendrucküberwachungssensoren sind bekannt und in Neufahrzeugen vorhanden. In diesem Falle wird der ohnehin vorhandene Kommunikationskanal für die Signale der Reifendrucküberwachungssensoren zugleich benutzt für den Empfang von Signalen der Verschleißsensoren 13.

Die Verschleißsensoren 13 sind in besonderer Weise aufgebaut. Ein mechanischer Taststab 19 ist in einem Halter 20 geführt und liegt mit einem Kopf 21 an einem äußeren Belagträger 22 an und ist dabei senkrecht zur Ebene einer Bremsscheibe 23 ausgerichtet.

Ein Sensorelement 24 des Verschleißsensors 13 und/oder der Halter 20 sind mit einem inneren Belagträger 25 fest verbunden, insbesondere lösbar und austauschbar. Der Taststab 19 weist ein Rückstellelement auf, insbesondere eine Druckfeder 26, sodass der Kopf 21 unabhängig vom Abstand der Belagträger 22, 25 zueinander stets am äußeren Belagträger 22 anliegt. Das Sensorelement 24 detektiert die Position des Taststabes 19 im Halter 20 und ist insbesondere ein Hall-Sensor. Hierzu ist der Taststab 19 mit einem Magneten versehen.

Ohne Bremsdruck, also bei nicht belüftetem Bremszylinder 27, sind die Belagträger 22, 25 voneinander entfernt und zugehörige Bremsbeläge 28, 29 liegen nicht an der Bremsscheibe 23 an, siehe Fig. 2. Der Taststab 19 ist maximal aus dem Halter 20 ausgefahren.

Mit Bremsdruck, also bei belüftetem Bremszylinder 27, kommen die Bremsbeläge 28, 29 zur Anlage an der Bremsscheibe 23, siehe Fig. 3. Der Taststab 19 ragt dann weniger weit aus dem Halter 20 hervor.

Das Funkmodul 17 übersendet mit entsprechenden Signalen die Position des Taststabes 19 an das Funkmodul 18. Die Position des Taststabes 19 ist ein Maß für den Summenverschleiß der Bremsbeläge 28, 29.

Die Funkmodule 17, 18 kommunizieren vorzugsweise nur in einer Richtung. Das heißt, das Funkmodul 17 ist ausschließlich Sender und das Funkmodul 18 ausschließlich Empfänger. Alternativ können beide Funkmodule 17, 18 als Sender und Empfänger ausgestattet sein. Dadurch kann das Funkmodul 18 das dem Verschleißsensor 13 zugeordnete Funkmodul 17 anfunken und zur Übersendung von Verschleißsignalen auffordern.

Vorzugsweise sendet das Funkmodul 17 seine Signale zeitgesteuert, etwa alle 1 bis 10 Sekunden oder alle 10 bis 60 Sekunden oder noch seltener. Zusammen mit den Verschleißsignalen werden individuelle Kennungen der Verschleißsensoren 13 übersandt, sodass eine eindeutige Zuordnung zum jeweiligen Rad 11 und zur Funktion als Verschleißsensor möglich ist.

Die Funkmodule 17, 18 arbeiten vorzugsweise im Hochfrequenzbereich, insbesondere mit 433 MHz oder 868 MHz und/oder sind vorteilhafterweise an die Frequenz des vorhandenen Reifendrucküberwachungssystems angepasst.

Das Senden von Verschleißsignalen durch das Funkmodul 17 kann auch ausgelöst werden durch das Sensorelement 24. Beispielsweise wird ein Sendevorgang ausgelöst, wenn sich der Taststab 19 einige Sekunden lang nicht bewegt hat oder wenn nach einer Pause eine Bewegung des Taststabes 19 begonnen hat. Auch können im Sensorelement 24 Messdaten gespeichert und zusammen übersendet werden. So können beispielsweise Maxima oder Minima während eines Bremsvorgangs ermittelt und als Datensatz zur Verfügung gestellt werden. Funkmodul 17 und/oder Sensorelement 24 können mit entsprechenden Steuerungsfunktionen ausgestattet sein.

Im einfachsten Fall übersendet das Funkmodul 17 ein Warnsignal, wenn das Sensorelement 24 einen Grenzwert des Taststabes 19 ermittelt, also ein besonders tiefes Eintauchen des Taststabes 19 in den Halter 20.

Möglich ist auch eine Korrelation der vom Funkmodul 17 übermittelten Signale mit der Betätigung der Bremsen 12. Das Bremsen-Steuergerät im EBS-Modulator 14 verarbeitet elektronische Bremsbefehle, kennt somit Art und Zeitpunkt eines jeden Bremsbefehls und kann die vor, während und nach der Bremsbetätigung eingehenden Signale zur Auswertung verknüpfen..

### Bezugszeichenliste (Teil der Beschreibung)

- 10: Anhänger
- 11: Räder
- 12: Bremsen
- 13: Verschleißsensor
- 14: EBS-Modulator
- 15: Leitungen
- 16: Schnittstelle
- 17: Funkmodul
- 18: Funkmodul (Receiver)
- 19: Taststab
- 20: Halter
- 21: Kopf
- 22: äußerer Belagträger
- 23: Bremsscheibe
- 24: Sensorelement
- 25: innerer Belagträger
- 26: Druckfeder
- 27: Bremszylinder
- 28: Bremsbelag
- 29: Bremsbelag

## Patentansprüche

1. Elektronisches Bremssystem für ein Fahrzeug (10), mit einem elektronischen Steuergerät und Verschleißsensoren (13) an Bremsen (12), wobei Signale der Verschleißsensoren (13) drahtlos an das Steuergerät oder einen mit dem Steuergerät verbundenen Empfänger (18) übermittelt werden, **dadurch gekennzeichnet, dass** das Steuergerät einen Empfänger (18) für drahtlose Signale von Reifendrucksensoren eines Reifendrucküberwachungssystems aufweist oder mit einem derartigen Empfänger verbunden ist und dass die Verschleißsensoren (13) Sender (17) für die drahtlose Übermittlung von Signalen der Verschleißsensoren (13) im Format der Signale von Reifendrucksensoren aufweisen oder mit derartigen Sendern verbunden sind.

2. Elektronisches Bremssystem nach Anspruch 1, **dadurch gekennzeichnet, dass** die Verschleißsensoren (13) einen Summenverschleiß von auf Bremsscheiben (23) wirkenden Bremsbelägen (28, 29) messen.

3. Elektronisches Bremssystem nach einem der Ansprüche 1 bis 2, **dadurch gekennzeichnet, dass** die Verschleißsensoren (13) ein zum Verschleiß von Bremsbelägen (28, 29) proportionales Signal ausgeben.

4. Elektronisches Bremssystem nach einem der Ansprüche 1 bis 3, **dadurch gekennzeichnet, dass** Signale der Verschleißsensoren (13) verschiedener Bremsen (12) miteinander verglichen werden.

5. Elektronisches Bremssystem nach einem der Ansprüche 1 bis 4, **dadurch gekennzeichnet, dass** Signale der Verschleißsensoren (13) vor, während und/oder nach einer Bremsung übermittelt werden.

6. Elektronisches Bremssystem nach einem der Ansprüche 1 bis 5, **dadurch gekennzeichnet, dass** aus der Differenz der Signale der Verschleißsensoren (13) vor und nach der Bremsung beurteilt wird, ob sich die Bremse (12) wieder in eine Ausgangslage zurückgestellt hat.

7. Elektronisches Bremssystem nach einem der Ansprüche 1 bis 6, **dadurch gekennzeichnet, dass** zur Beurteilung der Signale der Verschleißsensoren (13) eine Aktivierung der Bremsen (12) herangezogen wird.

8. Elektronisches Bremssystem nach einem der Ansprüche 1 bis 7, **dadurch gekennzeichnet, dass** aus der Differenz eines maximalen Signals und eines Signals vor und/oder nach einer Bremsung beurteilt wird, ob die Bremsen (12) funktionsfähig sind.

9. Elektronisches Bremssystem nach einem der Ansprüche 1 bis 8, **dadurch gekennzeichnet, dass** die Verschleißsensoren (13) ein zur Position eines Sensorstabes (19) proportionales Signal ausgeben.

10. Elektronisches Bremssystem nach einem der Ansprüche 1 bis 9, **dadurch gekennzeichnet, dass** der Verschleißsensor (13) einen Taststab (19) beinhaltet, welcher mit einem Ende (21) mit einem Bremsbelagträger (22) fest verbunden ist oder dort anliegt, und dass eine Position eines anderen Endes des Taststabes (19) von einem Sensorelement (24) detektierbar ist.

11. Steuergerät für ein elektronisches Bremssystem nach einem der Ansprüche 1 bis 9, mit einer Software zur Auswertung von drahtlosen Signalen von Verschleißsensoren (13) an Bremsen (12).

12. Fahrzeug mit einem elektronischen Bremssystem nach einem der Ansprüche 1 bis 10.

## Claims

1. Electronic brake system for a vehicle (10), comprising an electronic control device and wear sensors (13) on brakes (12), signals of the wear sensors (13) being transmitted wirelessly to the control device or to a receiver (18) connected to the control device, **characterized in that** the control device has or is connected to a receiver (18) for wireless signals of tire pressure sensors of a tire pressure monitoring system, and **in that** the wear sensors (13) have or are connected to transmitters (17) for the wireless transmission of signals of the wear sensors (13) in the format of the signals of tire pressure sensors.

2. Electronic brake system according to claim 1, **characterized in that** the wear sensors (13) measure a cumulative wear of brake pads (28, 29) acting on brake disks (23).

3. Electronic brake system according to any of claims 1 to 2,
**characterized in that** the wear sensors (13) output a signal proportional to the wear of brake pads (28, 29).

4. Electronic brake system according to any of claims 1 to 3,
**characterized in that** signals of the wear sensors (13) of different brakes (12) are compared with one another.

5. Electronic brake system according to any of claims 1 to 4,
**characterized in that** signals of the wear sensors (13) are transmitted before, during and/or after a braking operation.

6. Electronic brake system according to any of claims 1 to 5,
**characterized in that** it is assessed, from the difference between the signals of the wear sensors (13) before and after the braking operation, whether the brake (12) has returned to an initial position.

7. Electronic brake system according to any of claims 1 to 6,
**characterized in that** an activation of the brakes (12) is used to assess the signals of the wear sensors (13).

8. Electronic brake system according to any of claims 1 to 7,
**characterized in that** it is assessed, from the difference between a maximum signal and a signal before and/or after a braking operation, whether the brakes (12) are functional.

9. Electronic brake system according to any of claims 1 to 8,
**characterized in that** the wear sensors (13) output a signal proportional to the position of a sensor rod (19).

10. Electronic brake system according to any of claims 1 to 9,
**characterized in that** the wear sensor (13) includes a probe rod (19) which is fixedly connected on one end (21) to a brake pad carrier (22) or rests there, and **in that** a position of another end of the probe rod (19) can be detected by a sensor element (24).

11. Control device for an electronic brake system according to any of claims 1 to 9, comprising software for evaluating wireless signals of wear sensors (13) on brakes (12).

12. Vehicle having an electronic brake system according to any of claims 1 to 10.

## Revendications

1. Système de frein électrique pour un véhicule (10), comprenant un appareil de commande électronique et des capteurs d'usure (13) sur les freins (12), dans lequel des signaux des capteurs d'usure (13) sont transmis sans fil à l'appareil de commande ou à un récepteur (18) connecté à l'appareil de commande, **caractérisé en ce que** l'appareil de commande présente un récepteur (18) pour les signaux sans fil de capteurs de pression des pneus d'un système de surveillance de la pression des pneus ou est connecté à un récepteur de ce type **et en ce que** les capteurs d'usure (13) présentent un émetteur (17) pour la transmission sans fil de signaux des capteurs d'usure (13) au format des signaux des capteurs de pression des pneus ou sont connectés à un émetteur de ce type.

2. Système de frein électronique selon la revendication 1, **caractérisé en ce que** les capteurs d'usure (13) mesurent une usure cumulée de garnitures de frein (28, 29) agissant sur les disques de frein (23).

3. Système de frein électronique selon l'une des revendications 1 à 2, **caractérisé en ce que** les capteurs d'usure (13) émettent un signal proportionnel à l'usure des garnitures de frein (28, 29).

4. Système de frein électronique selon l'une des revendications 1 à 3, **caractérisé en ce que** les signaux des capteurs d'usure (13) de différents freins (12) sont comparés les uns aux autres.

5. Système de frein électronique selon l'une des revendications 1 à 4, **caractérisé en ce que** les signaux des capteurs d'usure (13) sont transmis avant, pendant et/ou après un freinage.

6. Système de frein électronique selon l'une des revendications 1 à 5, **caractérisé en ce que** le retour des freins (12) dans une position initiale est évalué à partir de la différence entre les signaux des capteurs d'usure (13) avant et après le freinage.

7. Système de frein électronique selon l'une des revendications 1 à 6, **caractérisé en ce que,** pour l'évaluation des signaux des capteurs d'usure (13), une activation des freins (12) est prise en compte.

8. Système de frein électronique selon l'une des revendications 1 à 7, **caractérisé en ce que** l'état de marche des freins (12) est évalué à partir de la différence entre un signal maximal et un signal avant et/ou après un freinage.

9. Système de frein électronique selon l'une des revendications 1 à 8, **caractérisé en ce que** les capteurs d'usure (13) émettent un signal proportionnel à la position d'une tige de capteur (19).

10. Système de frein électronique selon l'une des revendications 1 à 9, **caractérisé en ce que** le capteur d'usure (13) contient une tige tactile (19) qui est reliée de façon fixe à une extrémité (21) à un support de garniture de frein (22) ou est appliquée sur celui-ci, **et en ce qu'**une position d'une autre extrémité de la tige tactile (19) peut être détectée par un élément de capteur (24).

11. Appareil de commande pour un système de frein électronique selon l'une des revendications 1 à 9, comprenant un logiciel pour l'analyse de signaux sans fil de capteurs d'usure (13) sur des freins (12).

12. Véhicule comprenant un système de frein électronique selon l'une des revendications 1 à 10.
